# EUROPÄISCHE PATENTANMELDUNG

(11) **EP 4 831 399 A2**
(43) Veröffentlichungstag der Anmeldung: **28.10.2026**
(21) Anmeldenummer: 26204207.0
(22) Anmeldetag: 05.03.2024
(51) Int. Cl.: E02B 8/02

(54) **RECHENREINIGUNGSVORRICHTUNG ZUM REINIGEN EINES RECHENROSTS EINES SIEBRECHENS SOWIE SIEBRECHEN**

(30) Priorität: 08.03.2023 DE 102023105754
(62) Dokumentnummer(n) der früheren Anmeldung(en) nach Art. 76 EPÜ: 24161322.3 / 4 428 315
(71) Anmelder: Huber SE, 92334 Berching (DE)
(72) Erfinder: Billner, Benedikt, 91171 Greding - Herrnsberg (DE)
(74) Vertreter: Canzler & Bergmeier Patentanwälte Partnerschaft mbB

(57) **Zusammenfassung**

Die Erfindung betrifft eine Rechenreinigungsvorrichtung (1) zum Reinigen eines Rechenrosts (28) eines Siebrechens (29), der dem Abscheiden und Entfernen von Rechengut aus einer strömenden Flüssigkeit, beispielsweise Abwasser, dient, mit wenigstens einem Räumelement (2) zum Erfassen und Räumen des Rechenguts, welches von dem Siebrechen (29) zurückgehalten wird, mit einer Hubwinde (3), mit deren Hilfe ein erstes Zugmittel (4) und ein zweites Zugmittel (5) auf- und abwickelbar sind, wobei beim Auf- und Abwickeln der Zugmittel (4, 5) das Räumelement (2) entlang einer Hubrichtung (7) bewegt wird, und mit wenigstens einer Betätigungseinrichtung (8), mit dessen Hilfe das zweite Zugmittel (5) derart manipulierbar ist, dass beim Manipulieren des zweiten Zugmittels (5) das Räumelement (2) zwischen einer Räumstellung und einer Offenstellung verschwenkt wird. Erfindungsgemäß ist das zweite Zugmittel (5) mit einem ersten Ende (9) an der Hubwinde (3) und mit einem zweiten Ende (10) an der Betätigungseinrichtung (8) angebunden und über eine am Räumelement (2) befestigte Umlenkung (11) geführt. Ferner betrifft die Erfindung einen Siebrechen (29).

## Beschreibung

Die vorliegende Erfindung betrifft eine Rechenreinigungsvorrichtung zum Reinigen eines Rechenrosts eines Siebrechens, der dem Abscheiden und Entfernen von Rechengut aus einer strömenden Flüssigkeit, beispielsweise Abwasser, dient, mit wenigstens einem Räumelement zum Erfassen und Räumen des Rechenguts, welches von dem Siebrechen zurückgehalten wird, mit einer Hubwinde, mit deren Hilfe ein erstes Zugmittel und ein zweites Zugmittel auf- und abwickelbar sind, wobei beim Auf- und Abwickeln der Zugmittel das Räumelement entlang einer Hubrichtung bewegt wird, und mit wenigstens einer Betätigungseinrichtung, mit dessen Hilfe das zweite Zugmittel derart manipulierbar ist, dass beim Manipulieren des zweiten Zugmittels das Räumelement zwischen einer Räumstellung und einer Abwurfstellung verschwenkt wird. Des Weiteren betrifft die Erfindung einen Siebrechen.

Aus der DE 1 731 985 U ist eine fahrbare Vorrichtung mit einer Putzharke, die durch Schwenkseile geschwenkt und durch Hubseile auf- und abgeführt wird, zum Reinigen von Wassereinlaufrechen bekannt. Der Antrieb der Putzharke erfolgt beispielsweise durch ein Doppelseilwindwerk. Zum Ausschwenken der Putzharke wird dabei die Länge des Schwenkseiles durch das Einwirken einer Schwenkrolle gegenüber der Länge der Hubseile verkürzt. Nachteilig hieran ist, dass die Schwenkrolle zum Verschwenken der Putzharke einerseits durch die Gewichtskraft der Putzharke und andererseits durch das anliegende Schwenkseil stark belastet wird. Zudem muss die Schwenkrolle mittels eines Führungsblechs beim Auf- und Abwickeln des Schwenkseils seitlich mitverschoben werden, wodurch das Schwenkseil und die Schwenkrolle belastet werden.

Aufgabe der vorliegenden Erfindung ist es, die aus dem Stand der Technik bekannten Nachteile zu beseitigen. Aufgabe ist es insbesondere, eine Reinigungsvorrichtung zum Reinigen eines Rechenrosts sowie einen Siebrechen zu schaffen, der das Verschwenken des Räumelements erleichtert und/oder das Auf- und Abwickeln der Zugmittel auf die Hubwinde verbessert.

Die Aufgabe wird gelöst durch eine Reinigungsvorrichtung sowie einen Siebrechen mit den Merkmalen des unabhängigen Patentanspruchs.

Vorgeschlagen wird eine Rechenreinigungsvorrichtung zum Reinigen eines Rechenrosts eines Siebrechens, der dem Abscheiden und Entfernen von Rechengut aus einer strömenden Flüssigkeit, beispielsweise Abwasser, dient. Derartige Siebrechen werden beispielsweise als Einlaufrechen bzw. Wassereinlaufrechen für Pumpstationen, Meerwasserentnahmesysteme, Wasserkraftwerke und/oder Kläranlagen verwendet.

Die Rechenreinigungsvorrichtung umfasst wenigstens ein Räumelement zum Erfassen und Räumen des Rechenguts, welches von dem Siebrechen zurückgehalten wird. Das Räumelement kann beispielsweise mit Harkenzähnen ausgeführt werden, die zumindest teilweise in den Rechenrost eingreifen können. So kann das Rechengut, das sich vor dem Siebrechen am Rechenrost sammelt, durch das Räumelement aufgegriffen werden.

Die Rechenreinigungsvorrichtung umfasst ferner eine Hubwinde, mit deren Hilfe ein erstes Zugmittel und ein zweites Zugmittel auf- und abwickelbar sind, wobei beim Auf- und Abwickeln der Zugmittel das Räumelement entlang einer Hubrichtung bewegt wird. Beim Aufwickeln der Zugmittel wirkt zumindest das erste Zugmittel derart auf das Räumelement ein, dass dieses entlang der Hubrichtung aufwärts bewegt wird. Aufgrund des Gewichts des Räumelements wird dieses beim Abwickeln der Zugmittel entlang der Hubrichtung abwärts bewegt. Als Hubrichtung ist dabei die Richtung zu verstehen, entlang der das Räumelement auf- und abwärts bewegt wird. Die Hubrichtung kann dabei im Wesentlichen vertikal verlaufen. Dies entspricht einem Aufstellwinkel des Siebrechens von 90°. Ebenfalls ist es möglich, dass der Siebrechen schräg aufgestellt ist und beispielsweise einen Aufstellwinkel im Bereich zwischen 50° und 90° einnimmt.

Zudem umfasst die Rechenreinigungsvorrichtung wenigstens eine Betätigungseinrichtung, mit dessen Hilfe das zweite Zugmittel derart manipulierbar ist, dass beim Manipulieren des zweiten Zugmittels das Räumelement zwischen einer Räumstellung und einer Offenstellung verschwenkt wird.

Damit das Rechengut von dem Räumelement aufgenommen werden kann, wird das Räumelement vorzugsweise in der Offenstellung mittels der Hubwinde abwärts bewegt. In der Offenstellung ist zwischen dem Räumelement und dem Siebrechen ein Durchgangsquerschnitt für das am Rechenrost befindliche Rechengut gebildet. Bei der Abwärtsbewegung wirkt das Räumelement nicht auf das Rechengut ein. Ist das Räumelement am unteren Endpunkt des Rechenrosts (die sogenannte Gerinnesohle) angelangt, wird das Räumelement mittels der Betätigungseinrichtung von der Offenstellung in die Räumstellung bewegt bzw. verschwenkt. In der Räumstellung liegt das Räumelement, insbesondere mit einer Schaufelfläche und/oder mithilfe der an der Schaufelfläche angebrachten Harkenzähne, derart an dem Rechenrost an, dass bei der Aufwärtsbewegung das Rechengut erfasst und mitbewegt wird.

Als Räumstellung ist somit die Stellung des Räumelements zu verstehen, in der das Räumelement das Rechengut vom Rechenrost abräumen bzw. entfernen kann. Am oberen Endpunkt wird das Rechengut mittels eines Abstreifers aus dem Räumelement entfernt. Im Anschluss kann das Räumelement mittels der Betätigungseinrichtung wieder in die Offenstellung verschwenkt werden.

Erfindungsgemäß ist das zweite Zugmittel mit einem ersten Ende an der Hubwinde und mit einem zweiten Ende an der Betätigungseinrichtung angebunden und über eine am Räumelement befestigte Umlenkung geführt. Somit kann das zweite Zugmittel beim Bewegen des Räumelements entlang der Hubrichtung mittels der Hubwinde auf- und abgewickelt werden. Die Umlenkung des zweiten Zugmittels bewegt sich somit entlang der Hubrichtung mit dem Räumelement mit.

Zum Verschwenken des Räumelements kann über das zweite Ende des zweiten Zugmittels die Betätigungseinrichtung manipulierend einwirken. So ist es beispielsweise vorstellbar, dass die Betätigungseinrichtung zum Manipulieren des zweiten Zugmittels das zweite Ende beispielsweise durch einen Linearantrieb oder einen Betätigungszylinder translatorisch verschiebt und/oder das zweite Zugmittel durch Befestigen des zweiten Endes an einer Betätigungswinde auf- oder abwickelt. Durch diese Manipulation ändert sich die wirksame Länge und/oder der Angreifwinkel des zweiten Zugmittels, wodurch die Umlenkung bewegt wird. Die Bewegung der Umlenkung bewirkt das Verschwenken des Räumelements, insbesondere um einen Schwenkpunkt und/oder eine Schwenkachse. Der Schwenkpunkt und/oder die Schwenkachse ist vorzugsweise im Bereich einer Befestigung des ersten und/oder eines dritten Zugmittels zum Räumelement angeordnet.

Hieraus ergibt sich, dass das erste Zugmittel und das zweite Zugmittel vorzugsweise gleichmäßig, mittels der Hubwinde auf- und abwickelbar sind. Da die Hubwinde und die Betätigungseinrichtung auf unterschiedlichen Seiten der Umlenkung auf das zweite Zugmittel einwirken, wird eine gegenseitige Beeinflussung reduziert. Zumindest beim Auf- und Abwickeln auf die Hubwinde resultiert eine leichte Querbewegung bzw. Winkeländerung des zweiten Zugmittels von der Hubwinde zu der am Räumelement befestigten Umlenkung. Die auf der anderen Seite der Umlenkung auf das zweite Zugmittel einwirkende Betätigungseinrichtung ist von dieser Querbewegung bzw. Winkeländerung nicht betroffen, wodurch diese nicht ausgeglichen werden müssen.

Vorteilhaft ist es, wenn die Rechenreinigungsvorrichtung ein drittes Zugmittel umfasst, welches mit Hilfe der Hubwinde auf- und abwickelbar ist. Mit Hilfe des dritten Zugmittels kann die Auf- und Abwärtsbewegung des Räumelements entlang der Hubrichtung stabilisiert werden. Zudem kann so die Gewichtskraft des Räumelements gleichmäßiger auf die Hubwinde übertragen werden. Vorzugsweise sind das erste Zugmittel und das dritte Zugmittel entlang einer Querrichtung der Rechenreinigungsvorrichtung voneinander beabstandet und/oder endseitig am Räumelement angeordnet. So kann auf eine zusätzliche Führung des Räumelements verzichtet werden oder die Führung querlastfrei betrieben werden. Ebenso ist es vorteilhaft, wenn das zweite Zugmittel entlang der Querrichtung zwischen dem ersten Zugmittel und dem dritten Zugmittel angeordnet ist. Dadurch sind die drei Zugmittel möglichst gleichmäßig entlang der Querrichtung verteilt. Vorzugsweise nehmen dabei das erste und das dritte Zugmittel im Wesentlichen die gesamte Gewichtskraft des Räumelements auf. Das zweite Zugmittel ist dabei lediglich für das Verschwenken des Räumelements wischen der Räumstellung und der Offenstellung zuständig.

Vorteilhaft ist es zudem, wenn wenigstens eines der Zugmittel als Seil, insbesondere Drahtseil und/oder Stahlseil, oder als Kette, insbesondere Gliederkette, ausgebildet ist. Vorzugsweise ist das erste Zugmittel als Hubseil oder Hubkette und/oder das zweite Zugmittel als Steuerseil oder Steuerkette und/oder das dritte Zugmittel als Hubseil oder Hubkette ausgebildet. Das erste Zugmittel und/oder das dritte Zugmittel sind somit als Hubseil oder Hubkette zum Auf- und Abwärtsbewegen des Räumelements und/oder zur Aufnahme dessen Gewichtskraft ausgebildet. Das zweite Zugmittel als Steuerseil oder Steuerkette ist dabei zum Verschwenken des Räumelements zwischen der Räumstellung und der Offenstellung ausgebildet.

Auch ist es von Vorteil, wenn die Hubwinde wenigstens eine Trommel zum Auf- und Abwickeln der Zugmittel und/oder eine Trommelwelle zum Auf- und Abwickeln der Zugmittel oder zum Aufnehmen der wenigstens einen Trommel umfasst. Beim Auf- und Abwickeln des Zugmittels wird dieses entlang der Querrichtung nebeneinander verlegt. Mithilfe der wenigstens einen Trommel kann die Verlegungsbreite entlang der Querrichtung begrenzt werden. Dadurch kann vermieden werden, dass die Zugmittel an der Hubwinde miteinander in Kontakt kommen. Mithilfe der Trommelwelle können die einzelnen Trommeln gleichmäßig und/oder mit einer Übersetzung zueinander angetrieben werden. Ebenfalls ist es vorstellbar, dass die Zugmittel auf die Trommelwelle auf- und abgewickelt werden. Dies führt zu einem einfacheren und/oder kostengünstigeren Aufbau der Hubwinde.

Auch ist es vorteilhaft, wenn auf der Trommelwelle eine Mehrzahl an Trommeln aufgenommen sind, wobei vorzugsweise jedem der Zugmittel jeweils eine der Trommeln zugeordnet ist und/oder die Trommeln vorzugsweise mittelbar über die Trommelwelle mechanisch miteinander gekoppelt sind. So können die Zugmittel synchron auf die jeweilige Trommel auf- und abgewickelt werden.

Des Weiteren ist es vorteilhaft, wenn die wenigstens eine Trommel in wenigstens zwei Trommelelemente teilbar ist. Die teilbar ausgebildete Trommel kann auf eine bestehende Trommelwelle einfach angebaut und/oder ausgetauscht werden. Die Trommel ist zusätzlich oder alternativ aus polymeren Werkstoff gebildet, so führt dies zu einem möglichst sanften bzw. schonendes Auf- und Abwickeln des zugeordneten Zugmittels an der Hubwinde. Auch kann dadurch die Reinigungsvorrichtung geräuschärmer betrieben werden. Zusätzlich oder alternativ ist die Trommel aus Metall, insbesondere Stahl, Gusseisen oder Alu, gebildet. Dadurch kann der Verschleiß an der Trommel reduziert werden.

Vorteile bringt es mit sich, wenn die Betätigungseinrichtung als Betätigungswinde einen Betätigungsantrieb und/oder eine Betätigungstrommel aufweist, wobei der Betätigungsantrieb vorzugsweise die Betätigungstrommel zum Aufwickeln des zweiten Zugmittels antreibt. Dadurch kann das zweite Zugmittel durch Auf- und Abwickeln durch die Betätigungswinde manipuliert werden. Das zweite Ende des zweiten Zugmittels ist somit im Bereich der Betätigungstrommel befestigt und wird mittels des Betätigungsantriebs auf- und abgewickelt, wodurch das Verschwenken des Räumelements resultiert.

Auch ist es vorteilhaft, wenn ein trommelseitiges Ende des ersten Zugmittels und/oder des dritten Zugmittels mit der Hubwinde und ein lagerseitiges Ende des ersten Zugmittels und/oder des dritten Zugmittels mit wenigstens einer Lagereinrichtung verbunden ist. Das trommelseitige Ende ist dabei vorzugsweise an der zugeordneten Trommel befestigt. Das lagerseitige Ende wird an der Lagereinrichtung befestigt.

Vorteilhaft ist es zudem, wenn die wenigstens eine Trommel, die Trommelwelle und/oder die Betätigungstrommel umfangsseitig mit einer Rillung versehen ist, so dass das der Trommel, der Trommelwelle und/oder der Betätigungstrommel zugeordnete Zugmittel, vorzugsweise einlagig und/oder mit gleicher Lagenanzahl, innerhalb der Rillung auf- und abwickelbar ist. So kann das zugeordnete Zugmittel möglichst gleichmäßig auf- und abgewickelt werden.

Des Weiteren ist es vorteilhaft, wenn die Reinigungsvorrichtung wenigstens eine weitere Umlenkung zum Umlenken des ersten Zugmittels und/oder des dritten Zugmittels umfasst. Die wenigstens eine weitere Umlenkung ist vorzugsweise am Räumelement befestigt. So befindet sich das trommelseitige Ende und das lagerseitige Ende des ersten und/oder des dritten Zugmittels auf unterschiedlichen Seiten der weiteren Umlenkung. Wird das erste Zugmittel und/oder das dritte Zugmittel mittels der Hubwinde auf- oder abgewickelt, so bewegt sich das an der weiteren Umlenkung befestigte Räumelement entlang der Hubrichtung.

Vorteile bringt es zudem mit sich, wenn die Reinigungsvorrichtung zwei Lagereinrichtungen und zwei weitere Umlenkungen für das erste Zugmittel und das dritte Zugmittel umfasst. Die Lagereinrichtungen und/oder die weiteren Umlenkungen sind vorzugsweise entlang der Querrichtung voneinander beabstandet, so dass die Zugmittel mit einem möglichst geringen Versatz verlaufen. So kann das Räumelement möglichst gleichmäßig entlang der Hubrichtung bewegt werden.

Auch ist es von Vorteil, wenn die Umlenkung und/oder die Betätigungseinrichtung entlang der Querrichtung, insbesondere im Wesentlichen mittig, zwischen den zwei Lagereinrichtungen und/oder den zwei weiteren Umlenkungen angeordnet ist. Dadurch ist die Betätigungseinrichtung mittig zwischen den zwei Lagerrollen der Lagerelemente angeordnet.

Vorteile bringt es mit sich, wenn die wenigstens eine Lagereinrichtung eine Lagerrolle aufweist, über die das erste Zugmittel und/oder das dritte Zugmittel geführt und/oder umgelenkt ist. So kann das erste Zugmittel und/oder das dritte Zugmittel über die Lagerrolle schonend umgelenkt werden. Mittels der Lagerrolle kann das lagerseitige Ende des ersten Zugmittels und/oder des dritten Zugmittels geometrisch verschoben werden, so dass eine einfachere Zugänglichkeit gewährleistet ist. Auch kann durch das Umlenken des ersten Zugmittels und/oder des dritten Zugmittels durch die Lagerrolle eine Aufbauhöhe der Rechenreinigungsvorrichtung reduziert werden, da dadurch ein notwendiger Abstand zwischen der Hubwinde und Lagereinrichtung zumindest teilweise quer zur Hubrichtung gewährleistet ist.

Vorteilhaft ist es zudem, wenn die wenigstens eine Lagereinrichtung wenigstens eine Feder umfasst, an der das lagerseitige Ende des ersten Zugmittels und/oder des dritten Zugmittels befestigt ist. Mittels der Feder können die äußeren Einwirkungen, beispielsweise einwirkende Kräfte auf das Räumelement und/oder Schwingungen des Räumelements, ausgleichen. Mithilfe der Lagerrolle können diese Kräfte zur Feder umgelenkt und/oder weitergeleitet werden.

Vorteile bringt es mit sich, wenn die Hubwinde einen Hubantrieb aufweist, wobei der Hubantrieb die Trommelwelle antreibt. Vorzugsweise ist der Hubantrieb seitlich an die Trommelwelle angebunden. Zudem kann die Hubwinde ein Getriebe zur Übersetzung der Antriebsdrehzahl des Hubantriebs auf die Wellendrehzahl der Trommelwelle aufweisen.

Auch ist es von Vorteil, wenn die Rechenreinigungsvorrichtung eine Steuereinrichtung umfasst, die vorzugsweise mit dem Hubantrieb, insbesondere mittels eines Frequenzumrichters, und/oder mit der Betätigungseinrichtung, insbesondere mittels eines Schütz, in Wirkverbindung steht. Mithilfe der Steuereinrichtung kann die Rechenreinigungsvorrichtung derart gesteuert werden, dass während eines Hubvorgangs die Betätigungseinrichtung stillsteht und das Räumelement in der aktuellen Stellung (Offenstellung oder Räumstellung) gehalten wird. Während des Verschwenkens des Räumelements zwischen der Räumstellung und der Offenstellung kann die Rechenreinigungsvorrichtung derart gesteuert werden, dass die Hubwinde stillsteht.

### Auch ist es vorteilhaft, wenn die Steuereinrichtung als

Speicherprogrammierbare Steuerung (SPS) ausgebildet ist. Dadurch kann die Rechenreinigungsvorrichtung flexibler und zuverlässiger betrieben werden. Zudem kann dadurch die Wartung aus der Ferne vereinfacht werden.

Vorteile bringt es mit sich, wenn die Rechenreinigungsvorrichtung wenigstens einen Sensor, insbesondere einen Positionsschalter, einen Getriebeendschalter und/oder einen Drehgeber bzw. Encoder, zum Erfassen der Position und/oder der Stellung der Hubwinde, des Hubantriebs, des Betätigungsantriebs, der Betätigungseinrichtung und/oder des Räumelements umfasst. Der wenigstens eine Sensor ist vorzugsweise im Bereich der Hubwinde, des Hubantriebs, des Betätigungsantriebs, der Betätigungseinrichtung und/oder des Räumelements angeordnet. So kann stets die Lage, insbesondere die obere und/oder untere Endlage, des Räumelements detektiert werden. Ist der Sensor als Getriebeendschalter ausgebildete, so ist das Detektieren der Endlagen des Räumelements möglichst einfach und robust gewährleistet.

Zudem ist es von Vorteil, wenn der wenigstens eine Sensor mit der Steuereinrichtung in Wirkverbindung steht. So können der Hubantrieb und/oder die Betätigungseinrichtung möglichst effizient, nach detektierter Lage des Räumelements, gesteuert werden.

Ebenso ist es vorteilhaft, wenn der, insbesondere als Getriebeendschalter ausgebildete, Sensor den wenigstens einen Encoder, wenigstens ein Potentiometer und/oder den wenigstens einen Drehgeber umfasst. Zusätzlich oder alternativ ist es vorteilhaft, wenn der Sensor mit dem wenigstens einen Encoder, Potentiometer und/oder Drehgeber in Wirkverbindung steht. So kann die Information des Getriebeendschalters als Wegmessung genutzt werden.

Zudem ist es von Vorteil, wenn die Rechenreinigungsvorrichtung einen Rahmen umfasst. Vorteilhafterweise sind die Hubwinde, die Betätigungseinrichtung, die Lagereinrichtung, die Steuereinrichtung und/oder der wenigstens eine Sensor am Rahmen aufgenommen. Beispielsweise kann der Hubantrieb der Hubwinde, der Betätigungsantrieb der Betätigungswinde, die Steuerungseinrichtung, der wenigstens eine Sensor und/oder die wenigstens eine Feder der Lagereinrichtung verschiebefest am Rahmen angeordnet sein. Zudem oder alternativ kann die Trommelwelle, die wenigstens eine Trommel, die Betätigungstrommel und/oder die Lagerrolle drehbar am Rahmen, beispielsweise mittels wenigstens einem Radiallager, angeordnet sein. Mittels des Rahmens kann die Rechenreinigungsvorrichtung zum Reinigen des Rechenrosts am Siebrechen anliegen bzw. mit dem Siebrechen verbunden werden.

Ferner wird ein Siebrechen zum Abscheiden und Entfernen von Rechengut aus einer strömenden Flüssigkeit, beispielsweise Abwasser, mit einem Rechenrost und mit einer Rechenreinigungsvorrichtung, vorgeschlagen. Die Rechenreinigungsvorrichtung ist gemäß der vorangegangenen Beschreibung ausgebildet, wobei die genannten Merkmale einzeln oder in beliebiger Kombination vorhanden sein können. Auch kann der Rechenrost gemäß der vorangegangenen Beschreibung ausgebildet sein.

Weitere Vorteile der Erfindung sind in den nachfolgenden Ausführungsbeispielen beschrieben. Es zeigt:
- **Figur 1**: eine perspektivische Ansicht einer Rechenreinigungsvorrichtung, und
- **Figur 2 und 3**: schematisch geschnittene Seitenansichten einer an einem Siebrechen angeordneten Rechenreinigungsvorrichtung gemäß einem weiteren Ausführungsbeispiel.

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen gleichwirkenden oder gleichnamigen Merkmale.

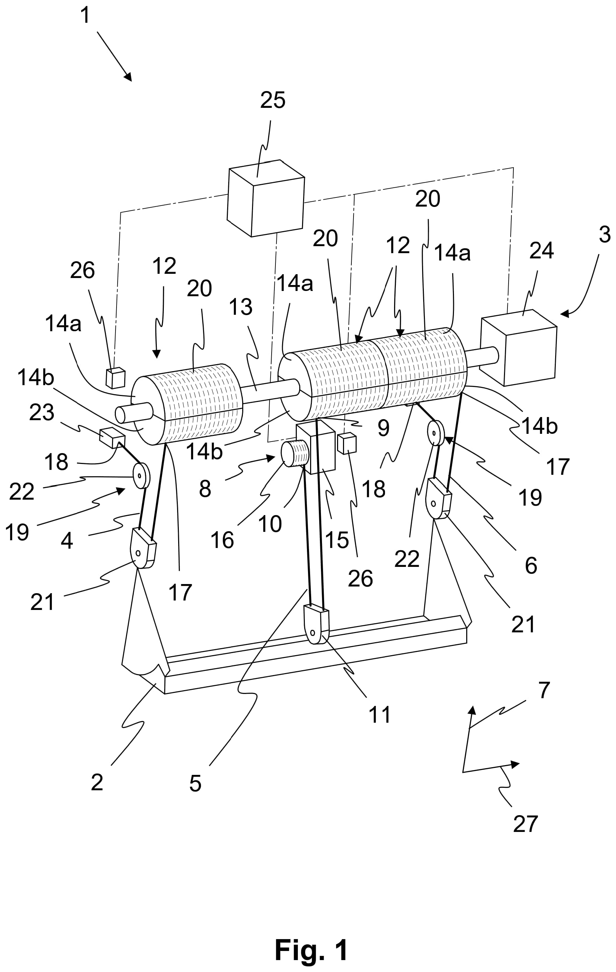

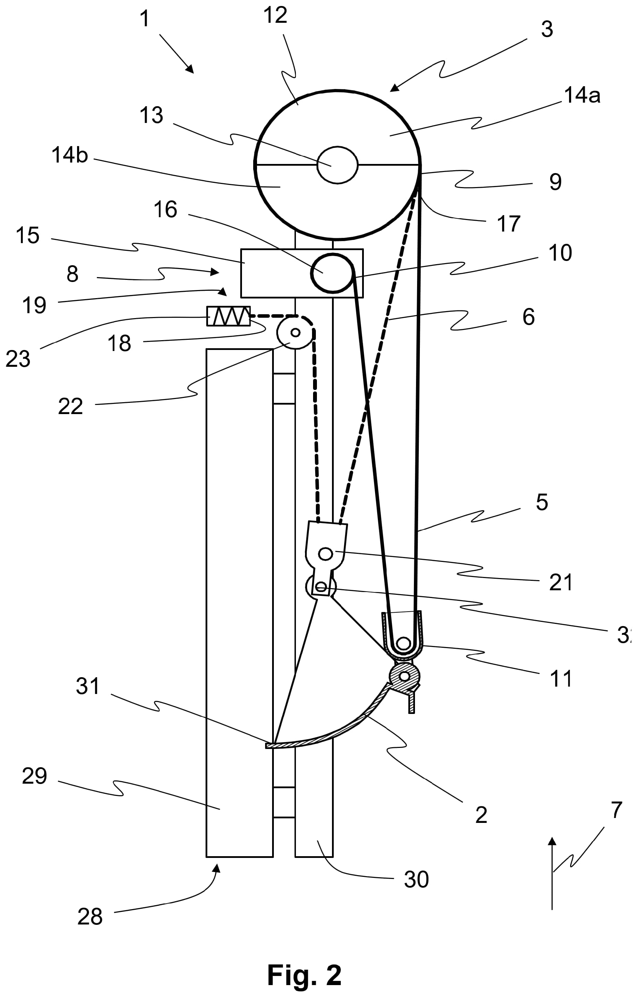

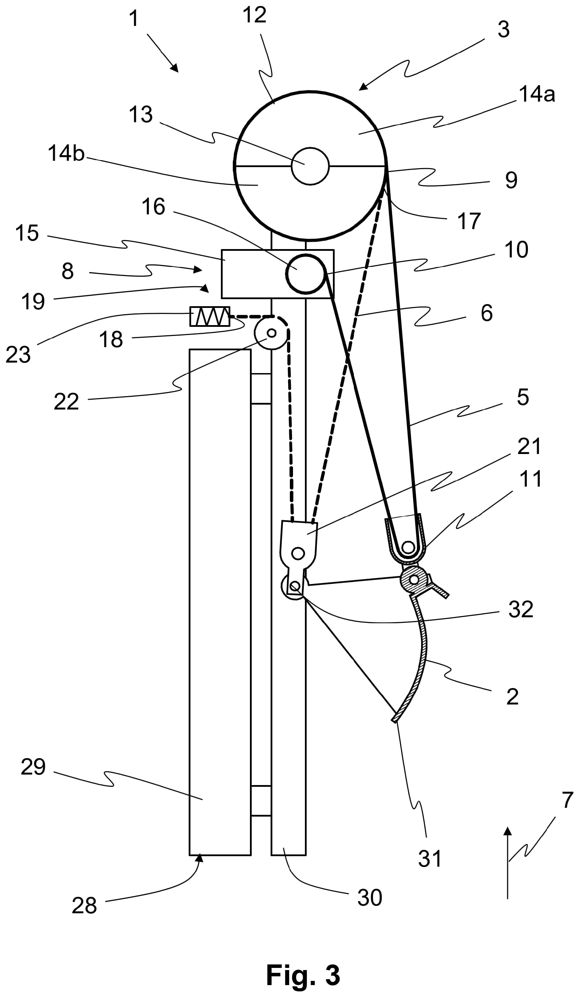

Figur 1 zeigt eine perspektivische Ansicht einer Rechenreinigungsvorrichtung 1, wobei diese alleinstehend dargestellt ist. Vorteilhafterweise ist diese, wie in den Figuren 2 und 3 gezeigt, an einem Siebrechen 29 angeordnet, um dort einen Rechenrost 28 zu reinigen. Zudem sind die einzelnen Komponenten der Rechenreinigungsvorrichtung 1 für eine übersichtlichere Darstellung ohne eine Aufnahme bzw. Lagerung gezeigt.

Die Rechenreinigungsvorrichtung 1 weist wenigstens ein Räumelement 2 zum Erfassen und Räumen von Rechengut auf. Das Räumelement 2 ist vorzugsweise, wie im gezeigten Ausführungsbeispiel dargestellt, schaufelförmig ausgebildet, sodass Rechengut einfach aufgenommen und entlang einer Hubrichtung 7 transportiert werden kann.

Damit das Räumelement 2 entlang der Hubrichtung 7 bewegt werden kann, weist die Rechenreinigungsvorrichtung 1 wenigstens eine Hubwinde 3 auf. Durch Aufwickeln und Abwickeln eines ersten Zugmittels 4, eines zweiten Zugmittels 5 und/oder eines dritten Zugmittels 6 wird das Räumelement 2 entlang der Hubrichtung 7 bewegt. Im gezeigten Ausführungsbeispiel sind das erste Zugmittel 4 und das dritte Zugmittel 6 entlang einer Querrichtung 27 der Rechenreinigungsvorrichtung 1 voneinander beabstandet bzw. endseitig am Räumelement 2 angeordnet. Das erste Zugmittel 4 und das dritte Zugmittel 6 haben im gezeigten Ausführungsbeispiel, insbesondere als Hubseil oder Hubkette, die Aufgabe, das Räumelement 2 entlang der Hubrichtung 7 auf- und abwärts zu bewegen. Dabei ist das erste Zugmittel 4 und das dritte Zugmittel 6 im gezeigten Ausführungsbeispiel mittels eines trommelseitigen Endes 17 mit der Hubwinde 3 verbunden.

Die Rechenreinigungsvorrichtung 1 weist zudem wenigstens eine Betätigungseinrichtung 8 auf, mit dessen Hilfe das zweite Zugmittel 5 derart manipulierbar ist, dass beim Manipulieren des zweiten Zugmittels 5 das Räumelement 2 zwischen einer Räumstellung und einer Offenstellung verschwenkt wird. Das zweite Zugmittel 5 ist mit einem ersten Ende 9 an der Hubwinde 3 und mit einem zweiten Ende 10 an der Betätigungseinrichtung 8 angebunden und über eine am Räumelement 2 befestigte Umlenkung 11 geführt. Das zweite Zugmittel 5 hat im gezeigten Ausführungsbeispiel, insbesondere als Steuerseil oder Steuerkette, die Aufgabe, das Räumelement 2 zwischen der Räumstellung und der Offenstellung zu Verschwenken.

Zum Aufwickeln der Zugmittel 4, 5, 6 weist die Hubwinde 3 je Zugmittel 4, 5, 6 eine Trommel 12 auf. Somit weist die Hubwinde 3 gezeigten Ausführungsbeispiel drei Trommeln 12 für die drei Zugmittel 4, 5, 6 auf. Die Trommeln 12 sind dabei mittels einer Trommelwelle 13 aufgenommen. Die Trommelwelle 13 wird durch einen Hubantrieb 24 angetrieben. Zum einfacheren Befestigen der wenigstens einen Trommel 12 auf der Trommelwelle 13 ist diese in wenigstens zwei Trommelelemente 14a, 14b, insbesondere zwei Trommelhälften, aufgeteilt. Zudem weisen die Trommeln 12 im gezeigten Ausführungsbeispiel eine Rillung 20 auf bzw. sind mit einer Rillung 20 versehen. In die jeweilige Rillung 20 der Trommeln 12 kann das jeweilige Zugmittel 4, 5, 6 beim Aufwickeln aufgenommen werden.

Die Betätigungseinrichtung 8 ist im gezeigten Ausführungsbeispiel als Betätigungswinde ausgebildet, wobei die Betätigungswinde wenigstens einen Betätigungsantrieb 15 und eine Betätigungstrommel 16 umfasst. Das zweite Zugmittel 5 ist dabei mit dem zweiten Ende 10 an der Betätigungstrommel 16 befestigt, wodurch das zweite Zugmittel 5 beim Antreiben der Betätigungstrommel 16 durch den Betätigungsantrieb 15 auf diese auf- und abgewickelt werden kann. Zum leichteren Auf- und Abwickeln des zweiten Zugmittels 5 kann auch die Betätigungstrommel 16 mit einer Rillung 20 versehen sein.

Wie vorstehend bereits erwähnt, ist das trommelseitige Ende 17 des ersten Zugmittels 4 und/oder des dritten Zugmittels 6 mit der Hubwinde 3 verbunden. Vorzugsweise ist das trommelseitige Ende 17 des ersten Zugmittels 4 und/oder des dritten Zugmittels 6 an wenigstens einer der Trommeln 12 der Hubwinde 3 befestigt. Ein lagerseitiges Ende 18 des ersten Zugmittels 4 und/oder des dritten Zugmittels 6 ist jeweils mit einer Lagereinrichtung 19 verbunden. Zum Umlenken des ersten Zugmittels 4 und/oder des dritten Zugmittels 6 weist die Rechenreinigungsvorrichtung 1 wenigstens eine weitere Umlenkung 21 auf. Im gezeigten Ausführungsbeispiel weist die Rechenreinigungsvorrichtung 1 zwei weitere Umlenkungen 21 zum Umlenken des ersten Zugmittels 4 und des dritten Zugmittels 6 auf. Das jeweilige trommelseitige Ende 17 und das jeweilige lagerseitige Ende 18 des ersten Zugmittels 4 und des dritten Zugmittels 6 befinden sich dabei an unterschiedlichen Seiten der jeweiligen weiteren Umlenkung 21.

Die Umlenkung 11 und die zwei weiteren Umlenkungen 21 sind, wie im gezeigten Ausführungsbeispiel dargestellt, vorzugsweise verschiebefest und drehbar, am Räumelement 2 befestigt. So kann die Kraftübertragung vom Räumelement 2 auf die Hubwinde 3, die wenigstens eine Lagereinrichtung 19 und die Betätigungseinrichtung 8 gewährleistet werden.

Wird das Räumelement 2 entlang der Hubrichtung 7 bewegt, so steht vorzugsweise die Betätigungseinrichtung 8 still. Die Zugmittel 4, 5, 6 werden dabei auf die jeweilige Trommel 12 der Hubwinde 3 auf- oder abgewickelt. Werden die Zugmittel 4, 5, 6 mittels der Hubwinde 3 aufgewickelt, so bewegt sich das Räumelement 2 mit der Umlenkung 11 und den weiteren Umlenkungen 21 aufwärts. Bei dieser Aufwärtsbewegung wird das Räumelement 2 vorzugsweise in der hier dargestellten Räumstellung gestellt.

Anschließend kann mittels der Betätigungseinrichtung 8 das Räumelement 2 von der Räumstellung in die Offenstellung verschwenkt werden. Ist die Betätigungseinrichtung 8 als Betätigungswinde ausgebildet, so kann das zweite Zugmittel 5 dabei auf die Betätigungstrommel 16 aufgewickelt werden.

Die Hubwinde 3 steht vorzugsweise still. Anschließend an das Verschwenken kann das Räumelement 2 in der hier nicht dargestellten Offenstellung abwärts bewegt werden. Hierfür werden die Zugmittel 4, 5, 6 mittels der Hubwinde 3 abgewickelt. Die Gewichtskraft des Räumelements bewirkt dabei vorzugsweise die Abwärtsbewegung. Ist das Räumelement 2 am unteren Endpunkt angelangt, so wird mittels der Betätigungseinrichtung 8 das Räumelement 2 vorzugsweise wieder in die Räumstellung verschwenkt. Hierbei kann bei der als Betätigungswinde ausgebildeten Betätigungseinrichtung 8 das zweite Zugmittel 5 von der Betätigungstrommel 16 abgewickelt werden.

Zudem weist im gezeigten Ausführungsbeispiel jede der Lagereinrichtungen 19 eine Lagerrolle 22 und eine Feder 23 auf. Das erste Zugmittel 4 und das dritte Zugmittel 6 sind im gezeigten Ausführungsbeispiel jeweils über die eine Lagerrolle 22 geführt und mit dem jeweiligen lagerseitigen Ende 18 mit der Feder 23 verbunden. Dadurch können das erste Zugmittel 4 und das dritte Zugmittel 6 federnd gelagert werden. Die Lagerrolle 22 kann die Federbewegung ausgleichen.

Zudem weist die Rechenreinigungsvorrichtung 1 im gezeigten Ausführungsbeispiel eine Steuereinrichtung 25 und wenigstens einen Sensor 26 auf. Mit dem wenigstens einen Sensor 26 kann die Position und/der Stellung der Hubwinde 3, des Hubantriebs 24, des Betätigungsantriebs 15, der Betätigungstrommel 16 und/oder des Räumelements 2 bestimmt werden. Der wenigstens eine Sensor 26 umfasst vorzugsweise wenigstens einen Positionsschalter, einen Drehgeber und/oder einen Getriebeendschalter zum Bestimmen der Position und/oder der Stellung der oben vorstehend genannten Merkmale. Die Steuereinrichtung 25 steht hierfür mit dem Hubantrieb 24, der Betätigungseinrichtung 8 und/oder mit dem wenigstens einen Sensor 26 in Wirkverbindung, sodass die Rechenreinigungsvorrichtung 1 das vorstehend beschriebene Verfahren ausführen kann.

Die Figuren 2 und 3 zeigen jeweils eine schematische geschnittene Seitenansicht einer an einem Siebrechen 29 angeordneten Rechenreinigungsvorrichtung 1 gemäß einem weiteren Ausführungsbeispiel. Der Siebrechen 29 dient im Wesentlichen dem Abscheiden und Entfernen von Rechengut aus einer strömenden Flüssigkeit, beispielsweise Abwasser. Im Wesentlichen handelt es sich bei den Ausführungsbeispielen der Figuren 2 und 3 um eine vereinfachte Darstellung der Rechenreinigungsvorrichtung 1 des Ausführungsbeispiels der Figur 1.

Der Schnitt verläuft dabei normal zur Querrichtung 27 mittig durch die Umlenkung 11 bzw. der Betätigungseinrichtung 8 der Figur 1. Da es sich bei den Ausführungsbeispielen der Figuren 2 und 3 um eine Schnittdarstellung handelt, ist das erste Zugmittel 4, wie es in Figur 1 dargestellt ist, weggeschnitten. Zudem ist für eine übersichtlichere Darstellung das zweite Zugmittel 5 als Volllinie und das dritte Zugmittel 6 als Strichlinie dargestellt.

Im Gegensatz zum Ausführungsbeispiel der Figur 1 ist in den Ausführungsbeispielen der Figuren 2 und 3 der Siebrechen 29 mit dem Rechenrost 28 dargestellt. Zum Befestigen der Rechenreinigungsvorrichtung 1 am Siebrechen 29 und/oder zum Aufnehmen der Hubwinde 3, der Betätigungseinrichtung 8, der Lagereinrichtung 19, der Steuereinrichtung 25 und/oder des wenigstens einen Sensors 26, weist die Rechenreinigungsvorrichtung 1 einen Rahmen 30 auf. Der Rahmen 30 und auch der Siebrechen 29 sind im gezeigten Ausführungsbeispiel lediglich schematisch bzw. teilweise dargestellt.

In der Figur 2 ist das Räumelement 2 in der Räumstellung angeordnet. In der Räumstellung liegt eine Schaufelfläche 31, an welcher beispielsweise Harkenzähne angeordnet sein können, zumindest abschnittsweise am Rechenrost 28 an und/oder ragt zumindest teilweise mit den Harkenzähnen in den Rechenrost 28 hinein. Wird das Räumelement 2 mittels der Betätigungseinrichtung 8 von der Räumstellung in die Offenstellung verschwenkt, so wirkt auf die Umlenkung 11 durch das zweite Zugmittel 5 eine Kraft in Hubrichtung 7 ein. Das dritte Zugmittel 6 und auch das nicht dargestellte erste Zugmittel 4 nehmen lediglich die Gewichtskraft des Räumelements 2 auf und stehen still.

Dadurch, dass beim Verschwenken an der Umlenkung 11 eine Kraft in Hubrichtung 7 einwirkt und die weitere Umlenkung 21 stillsteht, wird das Räumelement 2 beispielsweise um einen Schwenkpunkt 32 verschwenkt. Der Schwenkpunkt 32 liegt im gezeigten Ausführungsbeispiel im Bereich der weiteren Umlenkung 21, bzw. an einer Befestigung der weiteren Umlenkung 21 zum Räumelement 2. Da die Rechenreinigungsvorrichtung 1 im Bereich des ersten Zugmittels 4 (siehe Figur 1) ausgebildet ist, kann auch hier ein Schwenkpunkt 32 gebildet sein. Diese beiden Schwenkpunkte 32 bilden eine Schwenkachse aus, um die sich das Räumelement 2 verschwenkt. Anschließend an das Verschwenken befindet sich das Räumelement 2 in der Offenstellung. Die Offenstellung des Räumelements ist in der Figur 3 dargestellt.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Rechenreinigungsvorrichtung
- 2: Räumelement
- 3: Hubwinde
- 4: erstes Zugmittel
- 5: zweites Zugmittel
- 6: drittes Zugmittel
- 7: Hubrichtung
- 8: Betätigungseinrichtung
- 9: ersten Ende
- 10: zweiten Ende
- 11: Umlenkung
- 12: Trommel
- 13: Trommelwelle
- 14a, 14b: Trommelelement
- 15: Betätigungsantrieb
- 16: Betätigungstrommel
- 17: trommelseitiges Ende
- 18: lagerseitiges Ende
- 19: Lagereinrichtung
- 20: Rillung
- 21: weitere Umlenkung
- 22: Lagerrolle
- 23: Feder
- 24: Hubantrieb
- 25: Steuereinrichtung
- 26: Sensor
- 27: Querrichtung
- 28: Rechenrost
- 29: Siebrechen
- 30: Rahmen
- 31: Schaufelfläche
- 32: Schwenkpunkt

## Patentansprüche

1. Rechenreinigungsvorrichtung (1) zum Reinigen eines Rechenrosts (28) eines Siebrechens (29), der dem Abscheiden und Entfernen von Rechengut aus einer strömenden Flüssigkeit, beispielsweise Abwasser, dient,
- mit wenigstens einem Räumelement (2) zum Erfassen und Räumen des Rechenguts, welches von dem Siebrechen (29) zurückgehalten wird,
- mit einer Hubwinde (3), mit deren Hilfe ein erstes Zugmittel (4) und ein zweites Zugmittel (5) auf- und abwickelbar sind,
wobei beim Auf- und Abwickeln der Zugmittel (4, 5) das Räumelement (2) entlang einer Hubrichtung (7) bewegt wird, und
- mit wenigstens einer Betätigungseinrichtung (8), mit dessen Hilfe das zweite Zugmittel (5) derart manipulierbar ist, dass beim Manipulieren des zweiten Zugmittels (5) das Räumelement (2) zwischen einer Räumstellung und einer Offenstellung verschwenkt wird,
**dadurch gekennzeichnet,**
**dass** das zweite Zugmittel (5) mit einem ersten Ende (9) an der Hubwinde (3) und mit einem zweiten Ende (10) an der Betätigungseinrichtung (8) angebunden und über eine am Räumelement (2) befestigte Umlenkung (11) geführt ist, und
**dass** ein trommelseitiges Ende (17) des ersten Zugmittels (4) mit der Hubwinde (3) und ein lagerseitiges Ende (18) des ersten Zugmittels (4) mit wenigstens einer Lagereinrichtung (19) verbunden ist, wobei die wenigstens eine Lagereinrichtung (19) wenigstens eine Feder (23) umfasst, an der das lagerseitige Ende (18) des ersten Zugmittels (4) befestigt ist.

2. Rechenreinigungsvorrichtung (1) nach dem vorangegangenen Anspruch, **dadurch gekennzeichnet, dass** die Rechenreinigungsvorrichtung (1) ein drittes Zugmittel (6) umfasst, welches mit Hilfe der Hubwinde (3) auf- und abwickelbar ist, wobei vorzugsweise das erste Zugmittel (4) und das dritte Zugmittel (6) entlang einer Querrichtung (27) der Rechenreinigungsvorrichtung (1) voneinander beabstandet sind und/oder endseitig am Räumelement (2) angeordnet sind.

3. Rechenreinigungsvorrichtung (1) nach einem der vorangegangenen Ansprüche, **dadurch gekennzeichnet, dass** wenigstens eines der Zugmittel (4, 5, 6) als Seil oder als Kette ausgebildet ist,
wobei vorzugsweise das erste Zugmittel (4) als Hubseil oder Hubkette und/oder das zweite Zugmittel (5) als Steuerseil oder Steuerkette und/oder das dritte Zugmittel (6) als Hubseil oder Hubkette ausgebildet ist.

4. Rechenreinigungsvorrichtung (1) nach einem der vorangegangenen Ansprüche, **dadurch gekennzeichnet, dass** die Hubwinde (3) wenigstens eine Trommel (12) zum Auf- und Abwickeln der Zugmittel (4, 5, 6) und/oder eine Trommelwelle (13) zum Auf- und Abwickeln der Zugmittel (4, 5, 6) oder zum Aufnehmen der wenigstens einen Trommel (12) umfasst, und/oder dass die wenigstens eine Trommel (12) in wenigstens zwei Trommelelemente (14a, 14b) teilbar ist.

5. Rechenreinigungsvorrichtung (1) nach einem der vorangegangenen Ansprüche, **dadurch gekennzeichnet, dass** auf der Trommelwelle (13) eine Mehrzahl an Trommeln (12) aufgenommen sind,
wobei vorzugsweise jedem der Zugmittel (4, 5, 6) jeweils eine der Trommeln (12) zugeordnet ist und/oder die Trommeln (12) vorzugsweise mittelbar über die Trommelwelle (13) mechanisch miteinander gekoppelt sind.

6. Rechenreinigungsvorrichtung (1) nach einem der vorangegangenen Ansprüche, **dadurch gekennzeichnet, dass** die Betätigungseinrichtung (8) als Betätigungswinde einen Betätigungsantrieb (15) und/oder eine Betätigungstrommel (16) aufweist, wobei der Betätigungsantrieb (15) vorzugsweise die Betätigungstrommel (16) zum Auf- und Abwickeln des zweiten Zugmittels (5) antreibt.

7. Rechenreinigungsvorrichtung (1) nach einem der vorangegangenen Ansprüche, **dadurch gekennzeichnet, dass** ein trommelseitiges Ende (17) des dritten Zugmittels (6) mit der Hubwinde (3) und ein lagerseitiges Ende (18) des dritten Zugmittels (6) mit der wenigstens einer Lagereinrichtung (19) verbunden ist.

8. Rechenreinigungsvorrichtung (1) nach einem der vorangegangenen Ansprüche, **dadurch gekennzeichnet, dass** die wenigstens eine Trommel (12), die Trommelwelle (13) und/oder die Betätigungstrommel (16) umfangsseitig mit einer Rillung (20) versehen ist, so dass das der Trommel (12), der Trommelwelle (13) und/oder der Betätigungstrommel (16) zugeordnete Zugmittel (4, 5, 6), vorzugweise einlagig, innerhalb der Rillung (20) auf- und abwickelbar ist.

9. Rechenreinigungsvorrichtung (1) nach einem der vorangegangenen Ansprüche, **dadurch gekennzeichnet, dass** die Rechenreinigungsvorrichtung (1) wenigstens eine weitere Umlenkung (21) zum Umlenken des ersten Zugmittels (4) und/oder des dritten Zugmittels (6) umfasst.

10. Rechenreinigungsvorrichtung (1) nach einem der vorangegangenen Ansprüche, **dadurch gekennzeichnet, dass** die wenigstens eine Lagereinrichtung (19) eine Lagerrolle (22) aufweist, über die das erste Zugmittel (4) und/oder das dritte Zugmittel (6) geführt und/oder umgelenkt ist, und/oder dass die wenigstens eine Lagereinrichtung (19) die wenigstens eine Feder (23) umfasst, an der das lagerseitige Ende (18) des dritten Zugmittels (6) befestigt ist.

11. Rechenreinigungsvorrichtung (1) nach einem der vorangegangenen Ansprüche, **dadurch gekennzeichnet, dass** die Hubwinde (3) einen Hubantrieb (24) aufweist, wobei der Hubantrieb (24) die Trommelwelle (13) antreibt.

12. Rechenreinigungsvorrichtung (1) nach einem der vorangegangenen Ansprüche, **dadurch gekennzeichnet, dass** die Rechenreinigungsvorrichtung (1) eine Steuereinrichtung (25) umfasst, die vorzugsweise mit dem Hubantrieb (24) und/oder mit der Betätigungseinrichtung (8) in Wirkverbindung steht.

13. Rechenreinigungsvorrichtung (1) nach einem der vorangegangenen Ansprüche, **dadurch gekennzeichnet, dass** die
Rechenreinigungsvorrichtung (1) wenigstens einen Sensor (26), insbesondere einen Positionsschalter, einen Getriebeendschalter und/oder einen Drehgeber umfasst,
wobei der wenigstens eine Sensor (26) vorzugsweise im Bereich der Hubwinde (3), des Hubantriebs (24), des Betätigungsantriebs (15), der Betätigungseinrichtung (8) und/oder des Räumelements (2) angeordnet ist, und/oder dass der wenigstens eine Sensor (26) mit der Steuereinrichtung (25) in Wirkverbindung steht.

14. Rechenreinigungsvorrichtung (1) nach einem der vorangegangenen Ansprüche, **dadurch gekennzeichnet, dass** die Rechenreinigungsvorrichtung (1) einen Rahmen (30) umfasst, wobei vorzugsweise die Hubwinde (3), die Betätigungseinrichtung (8), die Lagereinrichtung (19), die Steuereinrichtung (25) und/oder der wenigstens eine Sensor (26) am Rahmen (30) aufgenommen sind.

15. Siebrechen (29) zum Abscheiden und Entfernen von Rechengut aus einer strömenden Flüssigkeit, beispielsweise Abwasser,
mit einem Rechenrost (28) und mit einer Rechenreinigungsvorrichtung (1), **dadurch gekennzeichnet,**
**dass** die Rechenreinigungsvorrichtung (1) nach einem oder mehreren der vorherigen Ansprüche ausgebildet ist.
